# EUROPÄISCHE PATENTSCHRIFT

(11) **EP 1 162 338 B1**
(45) Veröffentlichungstag und Bekanntmachung des Hinweises auf die Patenterteilung: **04.01.2006**
(21) Anmeldenummer: 01113807.0
(22) Anmeldetag: 06.06.2001
(51) Int. Cl.: E05F 5/02, E05F 5/10, F16F 13/00

(54) **Vorrichtung zum Dämpfen von Stössen, vorzugsweise der Stösse von Möbeltüren oder Schubladen**
Shock absorbing device, especially for cabinet doors or drawers
Dispositif d'amortisseur de chocs, en particulier pour portes de meubles et tiroirs

(30) Priorität: 08.06.2000 DE 20010282 U
(43) Veröffentlichungstag der Anmeldung: 12.12.2001
(73) Patentinhaber: Arturo Salice S.p.A., I-22060 Novedrate (Como) (IT)
(72) Erfinder:
(74) Vertreter: Laufhütte, Dieter

(56) Entgegenhaltungen:
- US-A- 5 927 448
- US-A- 6 006 873

## Beschreibung

Die Erfindung betrifft eine Vorrichtung zum Dämpfen von Stößen, vorzugsweise der Stöße von Möbeltüren oder Schubladen, bestehend aus einem Zylinder mit einem Kolben, dessen aus einer Zylinderseite dichtend herausgeführte Kolbenstange einen die Stöße aufnehmenden Stößel bildet, der den mit einer Flüssigkeit gefüllten Zylinderraum in zwei Kammern unterteilt und Durchbrüche aufweist und/oder mit der Zylinderwand einen Durchtrittsspalt begrenzt, aus einer im Bereich des Austrittsendes des Zylinders angeordneten, die Kolbenstange führenden Buchse und aus einer zwischen den Kolben und dem Zylinderboden eingespannten Druckfeder.

Dämpfungsvorrichtungen dieser Art besitzen entweder einen komplizierten Aufbau oder sie sind großbauend oder sie gewähren keinen ruhigen und leisen Lauf. Ein unruhiger Lauf und störende Geräusche können insbesondere durch in der Dämpfungsflüssigkeit vorhandene Luftblasen verursacht werden.

Aus der US-A-6 006 873 ist eine Vorrichtung zum Dämpfen von Stößen bekannt, in welcher der Schaftteil der Führungsbuchse in einem elastischen Material eingefaßt ist.

Aus der US-A-5 927 448 wiederum ist es bekannt, dass neben der Führungsbuchse ein gesonderter Deckel, an dem sich die Führungsbuchse abstützt, vorhanden ist.

Aufgabe der Erfindung ist es daher, eine Dämpfungsvorrichtung der eingangs angegebenen Art zu schaffen, die bei möglichst gedrungener Bauweise einen ruhigen und leisen Lauf gewährleistet.

Erfindungsgemäß wird diese Aufgabe bei einer Dämpfungsvorrichtung der eingangs angegebenen Art dadurch gelöst, daß die Führungsbuchse einen mittleren Schaftteil verringerten Durchmessers aufweist mit einem sich kegelstumpfförmig verbreiternden Teil in eine komplementäre Bohrung eines den Zylinder schließenden Deckels greift und sich mit einem verbreiternden Endteil auf einem keilförmigen Ringbund der inneren Zylinderwandung abstützt und dass der Schaftteil von einem rohrabschnittförmigen Teil aus elastischem Material eingefaßt ist.

Die erfindungsgemäße Dämpfungsvorrichtung läßt sich aufgrund ihrer zu dimensionierenden Teile in kleiner und gedrungener Bauweise herstellen. Das rohrabschnittförmige Teil aus elastischem Material befindet sich in der kolbenstangenseitigen Zylinderkammer, in der sich die Luftblasen in einem Totraum störungsfrei sammeln. Luftblasen können auch störungsfrei von dem rohrabschnittförmigen Teil aufgenommen werden, der gleichsam eine Speicherhülse bildet.

Der die Speicherhülse bildende rohrabschnittförmige Teil kann aus Zell- oder Schaumgummi oder aus geschäumtem elastomeren Kunststoff bestehen. Er sollte vorzugsweise geschlossene Zellen besitzen, damit er sich stark komprimieren läßt.

Zweckmäßigerweise besteht der Deckel aus einem hülsenförmigen Teil mit einer Bohrung in seinem Boden zum Durchtritt der Kolbenstange und mit einem flanschförmigen Rand, über den sich der Deckel auf die ringförmige Stirnseite des Zylinders abstützt. Zur Verbindung des Deckels mit dem Zylinder können beide, wenn sie aus Kunststoff bestehen, durch eine Ultraschall-Schweißverbindung verbunden sein. Selbstverständlich kann die Verbindung auch in beliebiger anderer Art, beispielsweise durch Kleben, hergestellt werden.

Die Buchse kann sich auf dem Deckel mit einem den Schaftteil verbreiternden Teil abstützen. Zweckmäßigerweise greift die Buchse mit einem sich kegelstumpfförmig verbreiterndem Teil in den Deckel. Der sich verbreiternde Teil der Buchse kann sich auch auf einer Ringstufe des Innenraums des Deckels abstützen.

In weiterer Ausgestaltung der Erfindung ist vorgesehen, daß zwischen dem Boden des Deckels und der ringförmigen Stirnseite der Buchse eine ringförmige Lippendichtung gehaltert ist, die einen Austritt der Flüssigkeit, vorzugsweise Öl, verhindert.

ln weiterer Ausgestaltung der Erfindung ist vorgesehen, daß die Buchse an ihrem deckelseitigen Endbereich mit axialen Rippen versehen ist. Die rohrabschnittförmige Speicherhülse stützt sich dann auf den frei auslaufenden Enden dieser Rippen ab, so daß zwischen den Rippen ein Speicherraum für eventuelle Luftblasen gebildet wird.

Der untere verbreiterte Teil der Buchse kann mit Durchbrüchen oder Abschnitten versehen sein, die Durchtrittsspalte mit der Zylinderwand begrenzen.

Zweckmäßigerweise ist die Kolbenstange im Zylinder mit einem flachen Kopf versehen, mit dem sich diese auf dem Kolben abstützt. Der Kolben selbst ist mit Durchbrüchen versehen oder begrenzt mit der Zylinderwand einen Ringspalt.

Vorzugsweise weist der Kolben in seiner der Kolbenstange zugewandten Stirnseite eine querverlaufende Nut mit einer axialen Bohrung auf, die in eine verbreiterte axiale Bohrung mündet Der Kolben kann mit mindestens einer radialen Bohrung versehen sein, die die axiale Bohrung mit einem verbreiterten Kolbenabschnitt verbindet. Weiterhin kann der Kolben auf seiner dem Zylinderboden zugewandten Seite in seinem Durchmesser verringert sein, so daß ein Sitz für die Druckfeder gebildet wird.

Bei einer anderen Ausführungsform der Erfindung ist vorgesehen, daß der Kolben zwischen seiner Stirnseite und seinem verbreitertem Teil eine Ringnut aufweist, in die ein geschlitzter Ring eingesetzt ist. Dieser geschlitzte Ring wird unter dem Druck der Dämpfungsflüssigkeit gespreizt und verbessert dann die Führung des Kolbens in dem Zylinder, wobei der gespreizte Schlitz dann einen zusätzlichen Drosselkanal für die Dämpfungsflüssigkeit bildet.

Ein Ausführungsbeispiel der Erfindung wird nachstehend anhand der Zeichnung näher erläutert. In dieser zeigt
- Fig. 1: einen Längsschnitt durch eine erste Ausführungsform der Dämpfungsvorrichtung, bei der sich der Kolben in seiner oberen Endstellung befindet,
- Fig. 2: eine der Fig. 1 entsprechende Darstellung, in der sich der Kolben in der unteren Endstellung des Zylinders befindet,
- Fig. 3: einen Längsschnitt durch den Kolben,
- Fig. 4: eine Draufsicht auf den Kolben nach Fig. 3,
- Fig. 5: einen Längsschnitt durch den Deckel,
- Fig. 6: einen Längsschnitt durch das rohrabschnittförmige Teil aus porösem und elastischem Material,
- Fig. 7: einen Längsschnitt durch die Führungsbuchse der Kolbenstange,
- Fig. 8: einen Schnitt durch die Führungsbuchse längs der Linie VIII-Vlil in Fig. 7
- Fig. 9: eine Unteransicht der Führungsbuchse nach Fig. 7,
- Fig. 10: einen Längsschnitt durch den Zylinder,
- Fig. 11: einen Längsschnitt durch eine zweite Ausführungsform der Dämpfungsvorrichtung,
- Fig. 12: einen Längsschnitt durch den Kolben der Dämpfungsvorrichtung nach Fig. 7,
- Fig. 13: eine Seitenansicht eines geschlitzten Ringes, der in eine Ringnut des Kolbens nach Fig. 12 eingesetzt ist, und
- Fig. 14: eine Draufsicht auf den geschlitzten Ring nach Fig. 13.

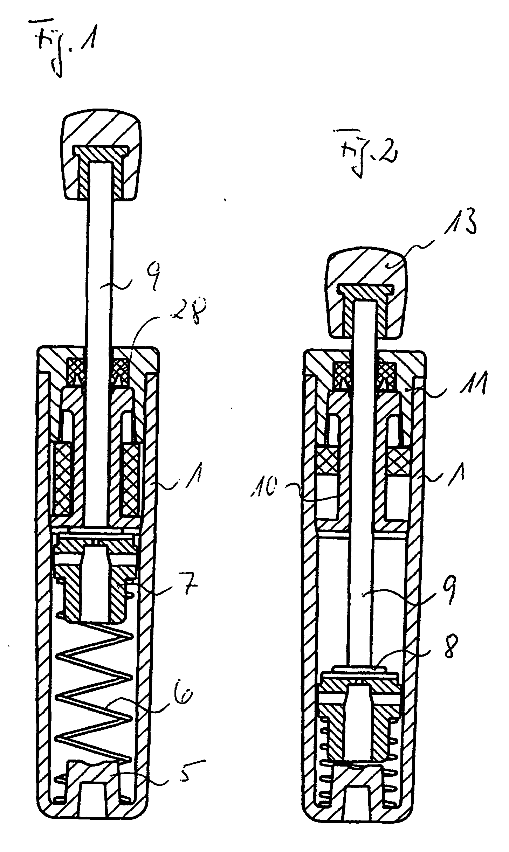

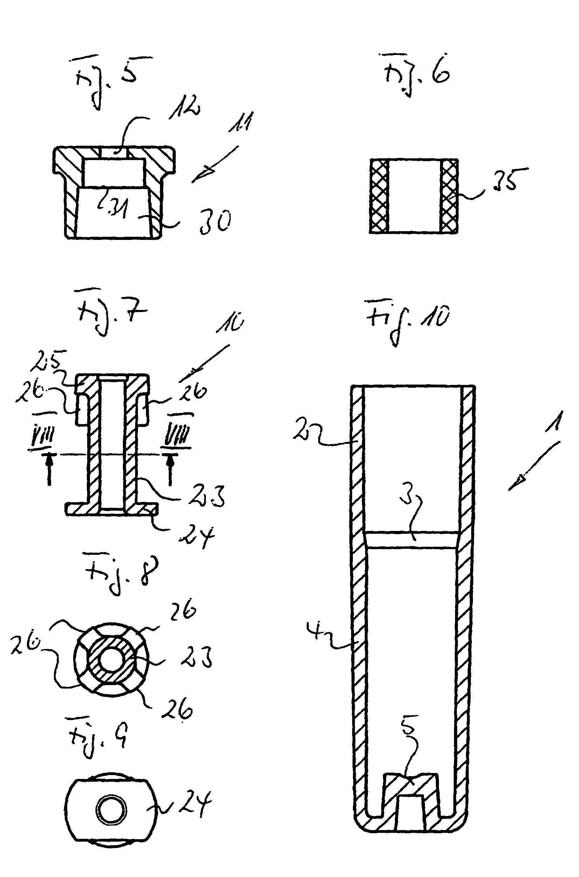

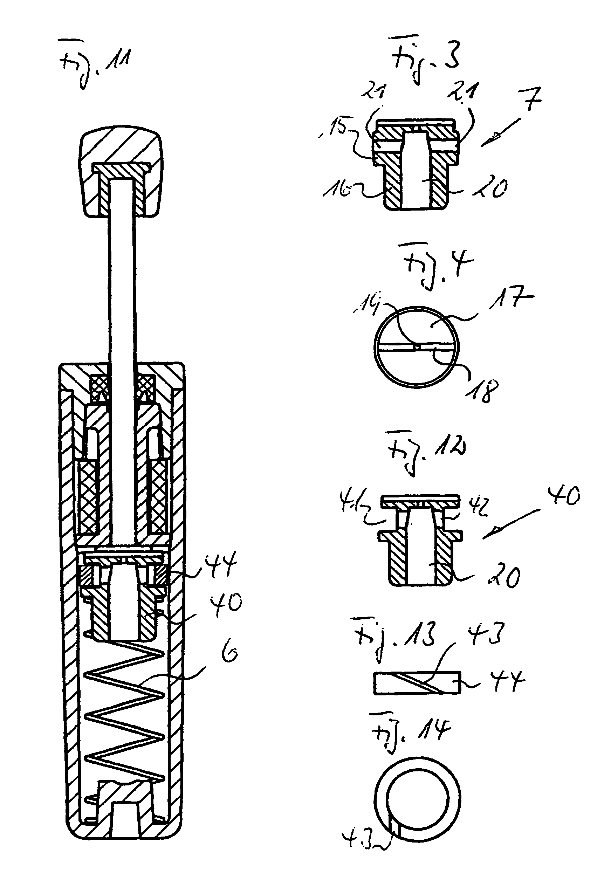

Die Dämpfungsvorrichtung nach den Fig. 1 bis 10 besteht aus einem hülsenförmigen Zylinder 1 aus Metall oder aus einem Spritzgußteil aus Kunststoff, der an seinem offenen Ende einen Abschnitt 2 mit größerem Durchmesser aufweist, der über eine abgeschrägte Ringstufe 3 in einen Abschnitt 4 mit geringerem Durchmesser übergeht. Der hülsenförmige Zylinder ist an seinem Boden geschlossen und mit einem von dem Boden aufragenden Sockel 5 versehen, der einen Halteteil für eine Druckfeder 6 bildet. In dem Zylinderabschnitt 4 mit geringerem Durchmesser ist ein verschieblicher Kolben 7 angeordnet, dessen obere Stimfläche sich auf einem flachen Kopf 8 abstützt, der an dem inneren Ende der Kolbenstange 9 angeordnet ist. Die Kolbenstange 9 ist in einer Führungsbuchse 10 geführt, die sich in einem hülsenförmigen Deckel 11 abstützt, der den Zylinder 1 abschließt. Die Kolbenstange 9 tritt durch eine Bohrung 12 des Deckels 11 nach außen und trägt an ihrem freien Ende eine mit dieser fest verbundene Kappe 13 aus weichem oder elastischem Material.

Der Kolben 7 weist einen ringförmigen Abschnitt 15 größeren Durchmessers auf, an den sich über eine Ringstufe ein Abschnitt 16 verringerten Durchmessers anschließt, der der Halterung des oberen Endes der Druckfeder 6 dient. Der ringförmige Abschnitt 15 kann in der aus der Zeichnung ersichtlichen Weise leicht konusförmig ausgebildet sein. Oberhalb des ringförmigen Abschnitts 15 schließt sich ebenfalls ein Abschnitt kurzer Länge mit geringerem Durchmesser an. Dieser Abschnitt ist an seiner Oberseite mit einer ebenen Stirnfläche 17 versehen, die auf einer Durchmesserlinie mit einer Nut 18 versehen ist. Diese Nut 18 ist in ihrem mittleren Bereich mit einer axialen Bohrung 19 versehen, die in einen erweiterten Bohrungsabschnitt 20 des Kolbens 7 mündet. Im Bereich des verbreiterten Abschnitts 15 ist der Kolben 7 mit fluchtenden radialen Bohrungen 21 versehen, die in die im Durchmesser verbreiterte axiale Bohrung 20 münden.

Die Führungsbuchse 10 für die Kolbenstange 9 besteht aus einem mittleren rohrförmigen Schaftteil 23, das an seinem unteren Ende eine flanschförmige Verbreiterung 24 aufweist. An seinem oberen Ende ist die Führungsbuchse 10 mit einem etwa kegelstumpfförmigen verbreiterten Teil 25 versehen. An den oberen verbreiterten kegelstumpfförmigen Abschnitt 25 schließen sich frei auslaufende radiale Rippen 26 an, wie es aus den Fig. 7 und 8 ersichtlich ist.

Der untere flanschförmige Teil 24 der Führungsbuchse 10 ist miteinander gegenüberliegenden Freischnitten, durch die Kreissegmente abgetrennt sind, versehen, wie dies aus Fig. 9 ersichtlich ist.

Die Führungsbuchse 23 greift mit ihrem oberen kegelstumpfförmigen Teil in eine komplementäre Bohrung 30 des Deckels 11 und stützt sich in dieser auf einer Ringstufe 31 ab. Zwischen der oberen ringförmigen Stimfläche der Führungsbuchse 10 und dem mit der Bohrung 12 versehenen Boden des Deckels 11 ist eine ringförmige Lippendichtung 28 in der aus den Fig. 1 und 2 ersichtlichen Weise eingesetzt.

Den Abschnitt des Schafts 23 der Führungsbuchse 10 zwischen dem unteren flanschförmigen Teil 24 und den axialen Rippen 26 faßt ein rohrabschnittförmiges Teil 35 aus einem stark komprimierbaren elastischem Material ein.

Bei dem Ausführungsbeispiel nach den Fig. 11 bis 14 ist der Kolben 40 zwischen diesen verbreiternden Abschnitten mit einer Ringnut 41 versehen, wobei in den Grund dieser Ringnut 41 radiale Bohrungen 42 münden, die die Ringnut mit der zentralen Bohrung 20 verbinden. In die Ringnut 41 ist ein mit einem schräg verlaufenden Schlitz 43 versehener Ring 44 eingesetzt, der aus elastischem Material besteht.

Bei der erfindungsgemäßen Dämpfungsvorrichtung stützt sich also die der Führung der Kolbenstange 9 dienende Buchse 10 einerseits mit ihrem den Durchmesser erweiternden Flansch 24 auf einer keilförmigen Ringstufe 3 der inneren Zylinderwandung und andererseits mit einem ebenfalls erweiterten, kegelstumpfförmigen Endbereich in einer komplementären Ausnehmung des Deckels 11 ab. Der kegelstumpfförmige Endbereich 25 der Buchse 10 ist mit frei in den Innenraum des Zylinders auslaufenden Rippen versehen. Zwischen diesen Rippen und dem ringförmigen Flansch der Buchse ist das rohrabschnittförmige Teil 35 angeordnet.

Zur Montage der Dämpfungsvorrichtung wird zunächst der Zylinder 1 mit einer Dämpfungsflüssigkeit, beispielsweise Öl, mit der erforderlichen Menge gefüllt. Anschließend werden die Druckfeder 6 und der Kolben 7, 40 eingesetzt. Sodann wird die von dem rohrabschnittförmigen Teil 35 eingefaßte Buchse zusammen mit der Kolbenstange, dem Deckel und ringförmigen Lippendichtung eingesetzt, wobei der Deckel mit dem Zylinder beispielsweise durch Ultraschallschweißung verbunden wird. Da der Deckel am Zylindermantel anliegt, werden eventuelle Luftblasen in den Ausnehmungen zwischen den radialen Rippen 26 der Führungsbuchse 10 zurückgehalten.

Fließt beim Eindrücken der Kolbenstange Öl in den kolbenstangenseitigen Zylinderraum, wird das rohrabschnittförmige Teil 35 in der aus Fig. 2 ersichtlichen Weise zusammengedrückt. Dabei wird kein Weg für die zwischen den axialen Rippen eventuell vorhandenen Luftblasen freigegeben, so daß durch diese die Funktionsfähigkeit der Dämpfungsvorrichtung nicht beeinträchtigt werden kann.

## Patentansprüche

1. Vorrichtung zum Dämpfen von Stößen, vorzugsweise der Stöße von Möbeltüren oder Schubladen, bestehend
aus einem Zylinder (1) mit einem Kolben (7, 40), dessen aus einer Zylinderseite dichtend herausgeführte Kolbenstange (9) einen die Stöße aufnehmenden Stößel bildet, der den mit einer Flüssigkeit gefüllten Zylinderraum in zwei Kammem unterteilt und Durchbrüche aufweist und/oder mit der Zylinderwand einen Durchtrittsspalt begrenzt,
aus einer im Bereich des Austrittsendes des Zylinders (1) angeordneten, die Kolbenstange (9) führenden Führungsbuchse (10) wobei die Führungsbuchse (10) einen mittleren Schaftteil (23) verringerten Durchmessers aufweist, der von einem rohrabschnittförmigen Teil (35) aus einem elastischen Material eingefaßt ist und
aus einer zwischen dem Kolben (7, 40) und dem Zylinderboden eingespannten Druckfeder (6),
**dadurch gekennzeichnet, daß** die Führungsbuchse
mit einem sich kegelstumpfförmig verbreiternden Teil (25) in eine komplementäre Bohrung (30) eines den Zylinder (1) schließenden Deckels (11) greift und sich mit einem verbreiterten Endteil (24) auf einem keilförmigen Ringbund (3) der inneren Zylinderwandung abstützt.

2. Vorrichtung nach Anspruch 1, **dadurch gekennzeichnet, daß** der rohrabschnittförmige Teil (35) aus Zell- oder Schaumgummi oder aus geschäumten elastomeren Kunststoff besteht.

3. Vorrichtung nach Anspruch 1 oder 2, **dadurch gekennzeichnet, daß** der Dekkel (11) aus einem hülsenförmigen Teil mit einer Bohrung (12) in seinem Boden zum Durchtritt der Kolbenstange (9) und mit einem flanschförmigen Rand besteht, mit dem sich der Deckel (11) auf die ringförmige Stirnseite des Zylinders (1) abstützt.

4. Vorrichtung nach einem der Ansprüche 1 bis 3, **dadurch gekennzeichnet, daß** die Führungsbuchse (10) sich auf dem Deckel mit einem den Schaftteil (23) verbreiternden Teil (25) abstützt.

5. Vorrichtung nach einem der Ansprüche 1 bis 4, **dadurch gekennzeichnet, daß** sich der verbreiterte Teil der Führungsbuchse auf einer Ringstufe (31) des Innenraums des Deckels (11) abstützt.

6. Vorrichtung nach einem der Ansprüche 1 bis 5, **dadurch gekennzeichnet, daß** zwischen dem Boden des Deckels (11) und der ringförmigen Stirnseite der Führungsbuchse (10) eine ringförmige Lippendichtung (28) gehaltert ist.

7. Vorrichtung nach einem der Ansprüche 1 bis 6, **dadurch gekennzeichnet, daß** die Führungsbuchse (10) an ihrem deckelseitigen Endbereich mit axialen Rippen (26) versehen ist, die von dem Mantel des Deckels umfaßt sind.

8. Vorrichtung nach einem der Ansprüche 1 bis 7, **dadurch gekennzeichnet, daß** der untere verbreiterte Teil der Führungsbuchse (10) mit Durchbrüchen oder Abschnitten versehen ist, die Durchtrittsspalte mit der inneren Zylinderwand begrenzen.

9. Vorrichtung nach einem der Ansprüche 1 bis 8, **dadurch gekennzeichnet, daß** die Kolbenstange (9) in dem Zylinder mit einem flachen Kopf (8) versehen ist, mit dem sie sich auf dem Kolben (7, 40) abstützt.

10. Vorrichtung nach einem der Ansprüche 1 bis 9, **dadurch gekennzeichnet, daß** der Kolben (7) mit Durchbrüchen versehen ist und/oder mit der Zylinderwand einen ringförmigen Spalt begrenzt.

11. Vorrichtung nach einem der Ansprüche 1 bis 10, **dadurch gekennzeichnet, daß** der Kolben (7) in seiner der Kolbenstange (9) zugewandten Stirnseite eine querverlaufende Nut (18) mit einer axialen Bohrung (19) aufweist, die in eine verbreiterte axiale Bohrung (20) des Kolbens (7) mündet.

12. Vorrichtung nach einem der Ansprüche 1 bis 11, **dadurch gekennzeichnet, daß** der Kolben (7) mit mindestens einer radialen Bohrung (21) versehen ist, die die axiale Bohrung (20) mit einem verbreiterten Kolbenabschnitt (15) verbindet.

13. Vorrichtung nach einem der Ansprüche 1 bis 12, **dadurch gekennzeichnet, daß** der Kolben auf seiner dem Zylinderboden zugewandten Seite in seinem Durchmesser verringert ist und einen Sitz für die Druckfeder (6) bildet.

14. Vorrichtung nach einem der Ansprüche 1 bis 13, **dadurch gekennzeichnet, daß** der Kolben (40) zwischen seiner Stirnseite und seinem verbreiterten Teil eine Ringnut (41) aufweist, in die ein vorzugsweise schräg geschlitzter Ring (44) eingesetzt ist.

## Claims

1. Shock absorbing device, especially for cabinet doors or drawers, consisting
of a cylinder (1) with a piston (7, 40), the piston rod (9) of which, guided sealingly out of one cylinder side, forms a slide which takes up the shocks, divides the cylinder space filled with a liquid into two chambers and has openings and/or delimits with the cylinder wall a passage gap,
of a guide bush (10) which is arranged in the region of the outlet end of the cylinder (1) and guides the piston rod (9), the guide bush (10) having a central shaft part (23) of reduced diameter which is surrounded by a tube-section-shaped part (35) made of an elastic material, and
of a compression spring (6) set between the piston (7, 40) and the cylinder bottom,
**characterized in that** the guide bush extends with a frustoconically widening part (25) into a complementary bore (30) of a cover (11) closing the cylinder (1) and is supported with a widened end part (24) on a wedge-shaped annular shoulder (3) of the inner cylinder wall.

2. Device according to Claim 1, **characterized in that** the tube-section-shaped part (35) is made from cellular rubber or foam rubber or from foamed elastomeric plastic.

3. Device according to Claim 1 or 2, **characterized in that** the cover (11) consists of a sleeve-shaped part with a bore (12) in its bottom for passage of the piston rod (9) and with a flange-shaped edge with which the cover (11) is supported on the annular end side of the cylinder (1).

4. Device according to one of Claims 1 to 3, **characterized in that** the guide bush (10) is supported on the cover with a part (25) which widens the shaft part (23).

5. Device according to one of Claims 1 to 4, **characterized in that** the widened part of the guide bush is supported on an annular step (31) of the interior of the cover (11).

6. Device according to one of Claims 1 to 5, **characterized in that** an annular lip seal (28) is retained between the bottom of the cover (11) and the annular end side of the guide bush (10).

7. Device according to one of Claims 1 to 6, **characterized in that** the guide bush (10) is provided with axial ribs (26) on its cover-side end region, which are surrounded by the shell of the cover.

8. Device according to one of Claims 1 to 7, **characterized in that** the lower widened part of the guide bush (10) is provided with openings or portions which delimit passage gaps with the inner cylinder wall.

9. Device according to one of Claims 1 to 8, **characterized in that** the piston rod (9) is in the cylinder provided with a flat head (8) with which it is supported on the piston (7, 40).

10. Device according to one of Claims 1 to 9, **characterized in that** the piston (7) is provided with openings and/or delimits with the cylinder wall an annular gap.

11. Device according to one of Claims 1 to 10, **characterized in that** the piston (7) has in its end side facing the piston rod (9) a transversely extending groove (18) with an axial bore (19) which runs into a widened axial bore (20) of the piston (7).

12. Device according to one of Claims 1 to 11, **characterized in that** the piston (7) is provided with at least one radial bore (21) which connects the axial bore (20) to a widened piston portion (15).

13. Device according to one of Claims 1 to 12, **characterized in that** the piston has a reduced diameter on its side facing the cylinder bottom and forms a seat for the compression spring (6).

14. Device according to one of Claims 1 to 13, **characterized in that** the piston (40) has an annular groove (41) between its end side and its widened part, into which a preferably obliquely slotted ring (44) is inserted.

## Revendications

1. Dispositif pour l'amortissement de chocs, de préférence de chocs de portes de meuble ou de tiroirs, comprenant
un cylindre (1) avec un piston (7, 40), dont la tige de piston (9) guidée de façon étanche à la sortie d'un côté de cylindre forme un coulisseau recevant les chocs, lequel subdivise l'espace de cylindre rempli d'un liquide en deux chambres et présente des percements et/ou délimite avec la paroi de cylindre une fente de passage,
une douille de guidage (10) disposée dans la zone de l'extrémité de sortie du cylindre (1) et guidant la tige de piston (9), la douille de guidage (10) présentant une partie de tige (23) centrale de diamètre réduit, laquelle est encadrée par une partie (35) en forme de section de tube à base d'un matériau élastique et
un ressort de pression (6) inséré entre le piston (7, 40) et le fond du cylindre,
**caractérisé en ce que** la douille de guidage s'engage avec une partie (25) s'élargissant en forme de cône tronqué dans un alésage (30) complémentaire d'un couvercle (11) fermant le cylindre (1), et s'appuie avec une pièce d'extrémité (24) élargie sur une collerette annulaire (3) en forme de clavette de la paroi de cylindre intérieure.

2. Dispositif selon la revendication 1, **caractérisé en ce que** la partie (35) en forme de section de tube est à base de caoutchouc cellulaire ou de caoutchouc mousse ou de plastique élastomère moussé.

3. Dispositif selon la revendication 1 ou 2, **caractérisé en ce que** le couvercle (11) comprend une partie en forme de douille avec un alésage (12) dans son fond pour le passage de la tige de piston (9) et d'un bord en forme de bride, avec lequel le couvercle (11) s'appuie sur le côté avant annulaire du cylindre (1).

4. Dispositif selon l'une quelconque des revendications 1 à 3, **caractérisé en ce que** la douille de guidage (10) s'appuie sur le couvercle avec une partie (25) élargissant la partie de tige (23).

5. Dispositif selon l'une quelconque des revendications 1 à 4, **caractérisé en ce que** la partie élargie de la douille de guidage s'appuie sur un étage annulaire (31) de l'espace intérieur du couvercle (11).

6. Dispositif selon l'une quelconque des revendications 1 à 5, **caractérisé en ce qu'**un joint à lèvres (28) de forme annulaire est maintenu entre le fond du couvercle (11) et la face frontale de forme annulaire de la douille de guidage (10).

7. Dispositif selon l'une quelconque des revendications 1 à 6, **caractérisé en ce que** la douille de guidage (10) est dotée sur sa zone d'extrémité côté couvercle de nervures (26) axiales qui sont entourées par l'enveloppe du couvercle.

8. Dispositif selon l'une quelconque des revendications 1 à 7, **caractérisé en ce que** la partie élargie inférieure de la douille de guidage (10) est dotée de percements ou de parties qui délimitent des fentes de passage avec la paroi de cylindre intérieure.

9. Dispositif selon l'une quelconque des revendications 1 à 8, **caractérisé en ce que** la tige de piston (9) est dotée dans le cylindre d'une tête (8) plate avec laquelle elle s'appuie sur le piston (7, 40).

10. Dispositif selon l'une quelconque des revendications 1 à 9, **caractérisé en ce que** le piston (7) est doté de percements et/ou délimite avec la paroi de cylindre une fente de forme annulaire.

11. Dispositif selon l'une quelconque des revendications 1 à 10, **caractérisé en ce que** le piston (7) présente dans sa face avant tournée vers la tige de piston (9) une rainure (18) agencée transversalement avec un alésage (19) axial, qui débouche dans un alésage (20) axial élargi du piston (7).

12. Dispositif selon l'une quelconque des revendications 1 à 11, **caractérisé en ce que** le piston (7) est doté d'au moins un alésage (21) radial, qui relie l'alésage (20) radial à une partie de piston (15) élargie.

13. Dispositif selon l'une quelconque des revendications 1 à 12, **caractérisé en ce que** le piston est réduit dans son diamètre sur son côté tourné vers le fond du cylindre et forme un siège pour le ressort de pression (6).

14. Dispositif selon l'une quelconque des revendications 1 à 13, **caractérisé en ce que** le piston (40) présente entre sa face avant et sa partie élargie une rainure annulaire (41), dans laquelle est insérée une bague (44) fendue de préférence en oblique.
